# EUROPÄISCHE PATENTSCHRIFT

(11) **EP 1 393 868 B1**
(45) Veröffentlichungstag und Bekanntmachung des Hinweises auf die Patenterteilung: **08.03.2006**
(21) Anmeldenummer: 03014214.5
(22) Anmeldetag: 25.06.2003
(51) Int. Cl.: B26D 3/10, B26D 1/00, B26F 1/12, F16G 3/00

(54) **Stanzwerkzeug für Riemen**
Apparatus for cutting a conveyor belt
Appareil pour couper une courroie

(30) Priorität: 27.08.2002 DE 10240005
(43) Veröffentlichungstag der Anmeldung: 03.03.2004
(73) Patentinhaber: E.C.H. Will GmbH, D-22529 Hamburg (DE)
(72) Erfinder: Voigtländer, Volkmar, 22083 Hamburg (DE)
(74) Vertreter: Seemann, Ralph

(56) Entgegenhaltungen:
- EP-A- 0 924 036
- DE-A- 3 933 710
- US-A- 1 357 727
- US-A- 1 660 387
- US-A- 3 300 826
- US-A- 5 499 565

## Beschreibung

Die Erfindung betrifft ein Stanzwerkzeug für Riemen.

In Maschinen der papierverarbeitenden Industrie werden Riemen und Riemchen eingesetzt zur Behandlung und zum Transport von Papierbogen bzw. Papierstapeln. Die verwendeten Riemen sind in sich geschlossen und quasi endlos. Darüber hinaus sind die Transportriemen elastisch und bestehen vorzugsweise aus Gummi oder Kunststoff. Um einen Riemen aus einem endlichen Band zu formen, werden die Enden des Bandes miteinander verbunden.

In der Offenlegungsschrift DE-A-39 33 710 sind ein Treibriemen aus Polyamid sowie ein Verfahren zur Herstellung einer Endverbindung an einem Treibriemen beschrieben. Hierbei werden die Bandenden mit komplementären Zick-Zack-Strukturen versehen und anschließend eine Lösung auf die Kontaktflächen aufgebracht. Nachfolgend werden die zusammengestoßenen Bandenden in eine Klemmvorrichtung eingespannt, so daß die Kontaktflächen unter Druck miteinander verklebt werden.

Ferner ist in der Offenlegungsschrift DE-A-197 56 047 ein Schneidwerkzeug zum Einbringen von dreieckigen Ausschnitten in ein elastisches Material, vorzugsweise Isoliermaterial, beschrieben. Das Schneidwerkzeug besteht aus zwei im Winkel angeordneten Schneidblechen, deren Schneiden durch jeweils einseitiges Anschleifen der äußeren Flächen gebildet sind. Dieses Stanzwerkzeug ist allerdings ungeeignet, Zick-Zack-Strukturen an den Enden eines Riemens auszubilden, so daß eine Verbindung über komplementäre Zick-Zack-Strukturen an den beiden zusammenzufügenden Riemenenden entsteht.

Aus der US 1.357.727 ist eine Vorrichtung zum schneiden von Zick-Zack-Strukturen bekannt, die in den Lederindustrie Anwendung findet. Diese Vorrichtung weist herkömmliche schneiden auf, die Zick-Zack-förmig angeordnet sind.

Ausgehend von diesem Stand der Technik ist es Aufgabe der vorliegenden Erfindung, die Bearbeitung und Herstellung von Riemen, insbesondere für Riemen in Maschinen der papierverarbeitenden Industrie, zu verbessern.

Gelöst wird diese Aufgabe durch ein Stanzwerkzeug für Riemen mit einer Zick-Zack-Stanzstruktur aus wenigstens drei Schneidkanten, wobei jeweils zwei quer zueinander angeordnete Schneidkanten einen gemeinsamen Endpunkt aufweisen. Im Gegensatz zum Stand der Technik, bei dem in zwei oder mehr Arbeitsschritten form- und funktionskomplementäre Zick-Zack-Strukturen an den Riemenenden ausgebildet werden, wird mittels dem erfindungsgemäßen Stanzwerkzeug in einem Arbeitsgang jeweils eine Zick-Zack-Struktur an den Riemenenden ausgebildet. Hierbei überlappen sich die Riemenenden, um passgenaue Enden zu erhalten. Erfindungsgemäß verläuft jede Schneidkante zwischen zwei Endpunkten, wobei wenigstens ein Endpunkt der einen Schneidkante gleichzeitig der Endpunkt einer anderen, benachbarten quer verlaufenden Schneidkante ist. Die Enden der Schneidkanten grenzen direkt aneinander bzw. berühren sich unmittelbar.

Ein einfacher Aufbau des Werkzeugs wird erreicht, wenn die Schneidkanten jeweils auf einem Schneidblech ausgebildet sind. Durch die einzelnen Schneidbleche können Stanzwerkzeuge unterschiedlich breit ausgebildet und angepaßt werden. Außerdem kann ein stumpfes Schneidblech leicht ausgetauscht werden. Insgesamt wird die Herstellung und Ausbildung eines Stanzwerkzeuges aus einzelnen Schneidblechen erleichtert, wobei eine hohe Variabilität erreicht wird.

Die Schneidkanten sind als Querschneiden ausgebildet. Unter dem Begriff "Querschneide" wird insbesondere eine Schneidkante verstanden, die als diagonale Schneidkante auf einem Grundkörper ausgebildet ist. Hierbei verläuft die Schneidkante nicht parallel und/oder längs einer Längsseite des Grundkörpers.

In einer vorteilhaften Weiterbildung der Erfindung sind die Schneidkanten als Schnitt wenigstens zweier asymmetrischer Schneidkantenflächen ausgebildet. Durch die Asymmetrie der Schneidkantenflächen wird erreicht, daß die Schneidkante quer zu den Längsachsen z.B. eines Schneidblechs, ausgebildet wird.

Die Bearbeitung eines Schneidblechs wird vereinfacht, wenn die Schneidkantenflächen symmetrisch, insbesondere achsensymmetrisch, zueinander angeordnet sind. Die Schneidkantenflächen werden durch zweiseitiges asymmetrisches Schleifen einer Blechkante erreicht. Hierbei kann das Schneidblech zunächst von einer Seite asymmetrisch angeschliffen werden. Das Anschleifen der anderen Seite erfolgt durch Umdrehen des Schneidblechs um eine Rotationsachse. Hierdurch entstehen auf einem Schneidblech die diagonal verlaufenden Schneidkanten bzw. Querschneiden.

Darüber hinaus sind bevorzugterweise zur Ausbildung des Stanzwerkzeuges die Schneidbleche und/oder die Schneidkanten symmetrisch, insbesondere spiegelsymmetrisch, zueinander angeordnet. Dadurch grenzen die ungeschliffenen Kanten der Schneiden der Schneidbleche paarweise aneinander und bilden die Spitzen der Zick-Zack-Struktur des Stanzwerkzeuges.

In einer besonders vorteilhaften Weiterbildung der Erfindung ist vorgesehen, daß das Stanzwerkzeug mittels zweier Arten von Schneidblechen ausgebildet ist. Hierdurch wird der Aufbau des Stanzwerkzeuges wesentlich erleichtert, da abwechselnd die zwei Schneidblecharten aneinander und nebeneinander angeordnet werden. Die Schneidbleche werden für die Ausbildung eines Stanzwerkzeuges in einem vorbestimmten Winkel (Öffnungswinkel) zueinander angeordnet.

Ferner sind die Schneidkanten gehärtet, so daß ein dauerhaftes Schneiden bzw. Stanzen mittels des erfindungsgemäßen Werkzeuges erreicht wird.

Des weiteren ist es von Vorteil, wenn das Stanzwerkzeug und/oder die Schneidbleche aus Metall, insbesondere Stahl, bestehen.

Eine weitere Lösung der Aufgabe besteht in der Verwendung eines voranstehend beschriebenen Stanzwerkzeuges zur Bearbeitung von Riemen, insbesondere von Riemen für Maschinen der papierverarbeitenden Industrie.

Nachfolgend wird die Erfindung anhand eines Ausführungsbeispieles ohne Beschränkung des allgemeinen Erfindungsgedankens anhand der Zeichnungen exemplarisch beschrieben, auf die im übrigen bezüglich aller im Text nicht näher erläuterten erfindungsgemäßen Einzelheiten ausdrücklich verwiesen wird. Es zeigen:
- Fig. 1: eine perspektivische Ansicht eines Stanzwerkzeuges,
- Fig. 2: eine Draufsicht auf das Stanzwerkzeug (Fig. 1),
- Fig. 3a - 3d: verschiedene Ansichten eines ersten Schneidblechs und
- Fig. 4a - 4d: verschiedene Ansichten eines zweiten Schneidblechs.

In den folgenden Figuren sind gleiche Elemente durch dieselben Bezugsziffern gekennzeichnet, so daß von einer erneuten Vorstellung der jeweiligen Elemente in diesen Fällen abgesehen wird.

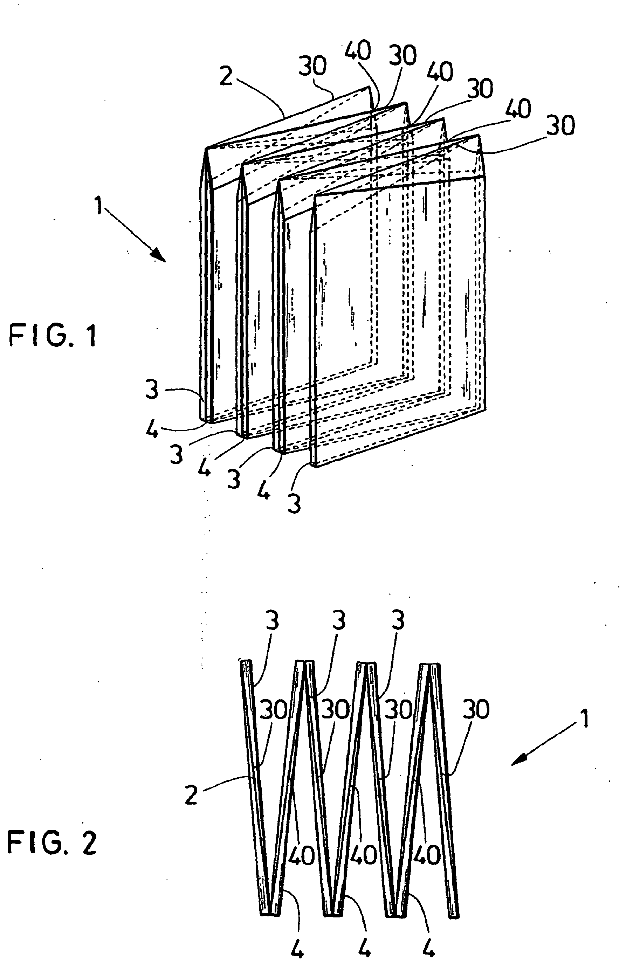

In Fig. 1 ist ein erfindungsgemäßes Stanzwerkzeug 1 in einer perspektivischen Darstellung gezeigt. Zur Verdeutlichung der Räumlichkeit des Stanzwerkzeuges 1 sind verdeckte und nicht sichtbare Kanten jeweils gestrichelt dargestellt. Das Stanzwerkzeug 1 besteht aus zwei verschiedenen Arten von Schneidblechen 3, 4, die abwechselnd und in einem bestimmten Öffnungswinkel zueinander angeordnet sind. Das Schneidblech 3 bzw. 4 weist auf der Oberseite jeweils eine Schneidkante 30 bzw. 40 auf. Die Schneidkanten 30, 40 der jeweiligen Schneidbleche 3, 4 sind zick-zack-förmig angeordnet und bilden eine Zick-Zack-Struktur 2 aus.

In Fig. 2 ist eine Draufsicht auf die Zick-Zack-Struktur 2 des Stanzwerkzeuges 1 gezeigt. Die Schneiden 30, 40 der Schneidbleche 3, 4 verlaufen jeweils quer zur rechteckigen Grundfläche des jeweiligen Schneidblechs und bilden somit eine Querschneide. Hierbei verläuft die Schneidkante 30, 40 jeweils zwischen den diagonal gegenüberliegenden Endpunkten. Der Endpunkt der Schneidkante 30 ist gleichzeitig auch der Endpunkt der in einem vorbestimmten Winkel zur Schneidkante 30 angeordneten Schneidkante 40 und umgekehrt. Die Enden der Schneidkanten 30, 40 berühren sich unmittelbar bzw. grenzen direkt aneinander.

Das Stanzwerkzeug 1 besteht aus zwei verschiedenen Arten von Schneidblechen, nämlich dem Schneidblech 3 und dem Schneidblech 4. Hierbei ist das Schneidblech 3 spiegelsymmetrisch zum Schneidblech 4 ausgebildet.

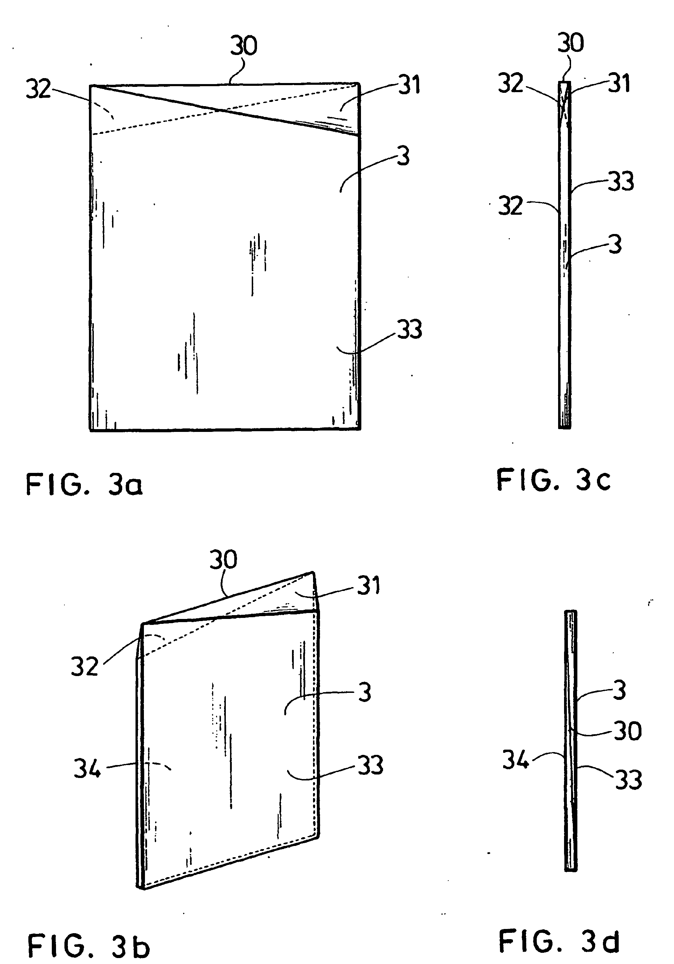

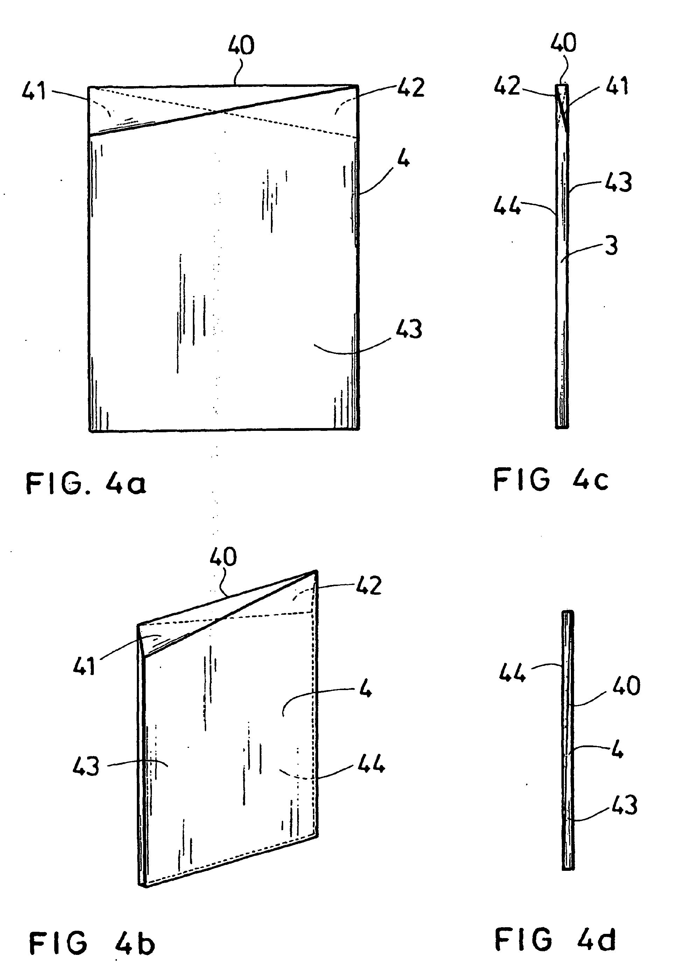

Das Schneidblech 3 ist in verschiedenen Ansichten in den Figuren 3a - 3d detailliert gezeigt. Das spiegelsymmetrische Schneidblech 4 ist in den Figuren 4a - 4d im Detail dargestellt.

### Zunächst zu den Figuren 3a - 3d:

Das Schneidblech 3 weist auf seiner Vorderseite 33 eine dreieckige, asymmetrische Schneidkantenfläche 31 auf, wobei die Schneidkante 30 eine Seite der Schneidkantenfläche 31 ist. Auf der Rückseite 34 ist ebenfalls eine dreieckige asymmetrische Schneidkantenfläche 32 ausgebildet, wobei die Schneidkante 30 ebenfalls eine Seite der dreieckigen Schneidkantenfläche ist. Die Schneidkantenfläche 31 und Schneidkantenfläche 32 sind achsensymmetrisch zueinander angeordnet, so daß die Schneidkante 30 als diagonal verlaufende Schneidkante ausgebildet ist.

In den Figuren 4a - 4d ist das Schneidblatt 4 in verschiedenen Ansichten dargestellt, die mit den Darstellungen des Schneidblatts 3 in den Figuren 3a - 3d korrespondieren. Hierbei ist anzumerken, daß das Schneidblatt 4 spiegelsymmetrisch zum Schneidblatt 3 ausgebildet ist. Das Schneidblatt 4 weist auf der Vorderseite 43 eine dreieckige Schneidkantenfläche 41 auf und auf der Rückseite 44 die zur Schneidkantenfläche 41 achsensymmetrisch angeordnete Schneidkantenfläche 42 auf.

### Bezugszeichenliste

- 1: Stanzwerkzeug
- 2: Zick-Zack-Struktur
- 3: Schneidblech
- 4: Schneidblech
- 30: Schneidkante
- 31: Schneidkantenfläche
- 32: Schneidkantenfläche
- 33: Vorderseite
- 34: Rückseite
- 40: Schneidkante
- 41: Schneidkantenfläche
- 42: Schneidkantenfläche
- 43: Vorderseite
- 44: Rückseite

## Patentansprüche

1. Stanzwerkzeug (1) für Riemen mit einer Zick-Zack-Stanzstruktur (2) aus wenigstens drei Schneidkanten (30, 40, 30; 40, 30, 40), wobei jeweils zwei quer zueinander angeordnete Schneidkanten (30, 40) einen gemeinsamen Endpunkt aufweisen und die Schneidkanten (30,40) als Querschneiden ausgebildet sind, die jeweils diagonal auf dem Grundkörper ausgebildet sind.

2. Stanzwerkzeug (1) nach Anspruch 1, **dadurch gekennzeichnet, dass** die Schneidkanten (30, 40) auf jeweils einem Schneidblech (3, 4) ausgebildet sind.

3. Stanzwerkzeug (1) nach Anspruch 1 oder 2, **dadurch gekennzeichnet, dass** die Schneidkanten (30, 40) als Schnitt wenigstens zweier asymmetrischer Schneidkantenflächen (31, 32; 41, 42) ausgebildet sind.

4. Stanzwerkzeug (1) nach Anspruch 3, **dadurch gekennzeichnet, dass** die Schneidkantenflächen (31, 32; 41, 42) symmetrisch, insbesondere achsensymmetrisch, zueinander angeordnet sind.

5. Stanzwerkzeug (1) nach einem der Ansprüche 1 bis 4, **dadurch gekennzeichnet, dass** die Schneidbleche (3, 4) und/oder die Schneidkanten (30, 40) symmetrisch, insbesondere spiegelsymmetrisch, zueinander angeordnet sind.

6. Stanzwerkzeug (1) nach einem oder mehreren der Ansprüche 1 bis 5, **dadurch gekennzeichnet, dass** das Stanzwerkzeug (1) mittels zweier Arten von Schneidblechen (3, 4) ausgebildet ist.

7. Stanzwerkzeug (1) nach Anspruch 6, **dadurch gekennzeichnet, dass** die Schneidbleche (3, 4) spiegelsymmetrisch zueinander ausgebildet sind.

8. Stanzwerkzeug (1) nach einem oder mehreren der Ansprüche 1 bis 7, **dadurch gekennzeichnet, dass** die Schneidkanten (30, 40) gehärtet sind.

9. Stanzwerkzeug (1) nach einem oder mehreren der Ansprüche 1 bis 8, **dadurch gekennzeichnet, dass** das Stanzwerkzeug (1) und/oder die Schneidbleche (3, 4) aus Metall, insbesondere Stahl, bestehen.

10. Verwendung eines Stanzwerkzeuges (1) nach einem oder mehreren der Ansprüche 1 bis 9 zur Bearbeitung von Riemen, insbesondere für Maschinen der Papier verarbeitenden Industrie.

## Claims

1. A cutting tool (1) for belts, having a zigzag cutting structure (2) comprising at least three cutting edges (30, 40, 30; 40, 30, 40), in each case two cutting edges (30, 40) which are arranged transversely to one another having a common end point, and the cutting edges (30, 40) being formed by transverse blades which are each formed diagonally on the base body.

2. A cutting tool (1) according to Claim 1, **characterised in that** the cutting edges (30, 40) are each formed on a cutting plate (3, 4).

3. A cutting tool (1) according to Claim 1 or 2, **characterised in that** the cutting edges (30, 40) are formed as a section of at least two asymmetric side edge faces (31, 32; 41, 42).

4. A cutting tool (1) according to Claim 3, **characterised in that** the cutting edge faces (31, 32; 41, 42) are arranged symmetrically, in particular with axial symmetry, with respect to one another.

5. A cutting tool (1) according to one of Claims 1 to 4, **characterised in that** the cutting plates (3, 4) and/or the cutting edges (30, 40) are arranged symmetrically, in particular with mirror symmetry, with respect to one another.

6. A cutting tool (1) according to one or more of Claims 1 to 5, **characterised in that** the cutting tool (1) is formed by means of two types of cutting plates (3, 4).

7. A cutting tool (1) according to Claim 6, **characterised in that** the cutting plates (3, 4) are formed to have mirror symmetry with respect to one another.

8. A cutting tool (1) according to one or more of Claims 1 to 7, **characterised in that** the cutting edges (30, 40) are hardened.

9. A cutting tool (1) according to one or more of Claims 1 to 8, **characterised in that** the cutting tool (1) and/or the cutting plates (3, 4) are made from metal, in particular steel.

10. Use of a cutting tool (1) according to one or more of Claims 1 to 9 for preparing belts, in particular for machines of the paper-processing industry.

## Revendications

1. Appareil (1) pour couper des courroies, présentant une structure de coupe en zigzag (2) avec au moins trois arêtes de coupe (30, 40, 30 ; 40, 30, 40), où chacune des deux arêtes de coupe (30, 40) disposées transversalement l'une par rapport à l'autre présente un point d'extrémité commun, et les arêtes de coupe (30, 40) sont réalisées comme des lames transversales, qui sont réalisées respectivement en diagonale sur le corps de base.

2. Appareil de découpe (1) selon la revendication 1, **caractérisé en ce que** les arêtes de coupe (30, 40) sont réalisées respectivement sur une tôle de coupe (3, 4).

3. Appareil de découpe (1) selon la revendication 1 ou 2, **caractérisé en ce que** les arêtes de coupe (30, 40) sont réalisées en découpe d'au moins deux surfaces d'arête de coupe (31, 32 ; 41, 42) asymétriques.

4. Appareil de découpe (1) selon la revendication 3, **caractérisé en ce que** les surfaces d'arêtes de coupe (31, 32 ; 41, 42) sont disposées les unes par rapport aux autres de façon symétrique, en particulier symétrique par rapport à l'axe.

5. Appareil de découpe (1) selon l'une des revendications 1 à 4, **caractérisé en ce que** les tôles de coupe (3, 4) et/ou les arêtes de coupe (30, 40) sont disposées de façon symétrique entre elles, en particulier en symétrie optique.

6. Appareil de découpe (1) selon une ou plusieurs des revendications 1 à 5, **caractérisé en ce que** l'appareil de découpe (1) est réalisé au moyen de deux types de tôles de coupe (3, 4).

7. Appareil de découpe (1) selon la revendication 6, **caractérisé en ce que** les tôles de coupe (3, 4) sont réalisées en symétrie optique entre elles.

8. Appareil de découpe (1) selon une ou plusieurs des revendications 1 à 7, **caractérisé en ce que** les arêtes de coupe (30, 4à) sont durcies.

9. Appareil de découpe (1) selon une ou plusieurs des revendications 1 à 8, **caractérisé en ce que** l'appareil de découpe (1) et/ou les tôles de coupe (3, 4) sont en métal, en particulier en acier.

10. Utilisation d'un appareil de découpe (1) selon une ou plusieurs des revendications 1 à 9 pour travailler sur des courroies, en particulier pour des machines de l'industrie du papier.
